# FASCICULE DE BREVET EUROPEEN

(11) **EP 1 570 944 B1**
(45) Date de publication et mention de la délivrance du brevet: **28.10.2009**
(21) Numéro de dépôt: 05300115.2
(22) Date de dépôt: 14.02.2005
(51) Int. Cl.: B23K 35/365

(54) **Electrode enrobée à faible émission de fumées et bas chrome hexavalent pour le soudage des aciers inoxydables**
Umhüllte Elektrode mit niedrigem Gasausstoss und niedrigem hexavalenten Chrom, zum Schweissen von rostfreiem Stahl
Coated electrode with low gas emission and low hexavalent chromium, for welding stainless steel

(30) Priorité: 01.03.2004 FR 0450398
(43) Date de publication de la demande: 07.09.2005
(73) Titulaire: AIR LIQUIDE WELDING FRANCE, 75007 Paris (FR); L'AIR LIQUIDE, Société Anonyme pour l'Etude et l'Exploitation des Procédés Georges Claude, 75007 Paris (FR)
(72) Inventeur: BAUNE, Emmanuel, 95660, CHAMPAGNE S/OISE (FR)
(74) Mandataire: Pittis, Olivier

(56) Documents cités:
- EP-A- 0 342 036
- FR-A- 1 379 643
- GB-A- 1 581 182
- US-A- 2 697 159

## Description

La présente invention concerne le domaine des électrodes enrobées écologiques de type rutile, à fusion douce, à faible émission de fumées, à faible émission de chrome hexavalent (Cr^{VI}) et à enrobage solide, c'est-à-dire peu ou pas friable, destinées en particulier au soudage des aciers inoxydables.

Les fumées émises lors des opérations de soudage, issues de processus complexes de vaporisation - condensation - oxydation ou vaporisation - oxydation - condensation, comptent parmi les nuisances associées au soudage à l'arc. De ce fait, les fumées de soudage, dont la nature et la quantité constituent une préoccupation grandissante dans les ateliers de fabrication, imposent de recourir à des protections, tels des extracteurs de fumées, afin de préserver la santé des opérateurs et des membres du personnel travaillant à proximité.

D'un point de vue général, un acier inoxydable se définit comme un alliage de fer dont la teneur nominale en chrome est d'au moins 11% en poids. Son utilisation se justifie lorsqu'une bonne tenue à l'oxydation et à la corrosion est recherchée. Parmi les aciers inoxydables figurent plusieurs sous-catégories d'aciers, à savoir :
- les aciers austénitiques, vraisemblablement les plus couramment usités et souvent cités sous l'appellation « série 300 » de par leur classement selon la normalisation américaine, dont la composition est basée sur le système fer - chrome - nickel, et dont le total des teneurs en éléments Cr, Ni, Mn et Si excède 16% en poids dans l'alliage ; et
- les aciers martensitiques ;
- les aciers ferritiques ;
- les aciers duplex ;
- les alliages d'aciers à durcissement par précipitation ; et
- les super-alliages d'aciers.

De fait, la forte présence de l'élément chrome dans les aciers inoxydables fait que, pendant leur soudage, les particules constitutives des fumées de soudage contiennent une forte teneur en composés porteurs de l'élément chrome, à savoir chrome trivalent (Cr^{III}), forme la moins toxique de l'élément chrome, et/ou chrome hexavalent (Cr^{VI}), forme connue comme étant fortement toxique pour l'être humain puisque considéré comme cancérogène.

Dans le cas du soudage des aciers inoxydables, l'élément chrome hexavalent (Cr^{VI}), issu des fumées de soudage et présent dans l'air respiré, est donc particulièrement réglementé, compte tenu de son caractère toxique potentiel.

Ainsi, sachant que les réglementations en vigueur dans la plupart des pays indiquent que la valeur moyenne d'exposition (VME) tolérée est de 5 mg/m³ d'air pour les particules de fumées "non nocives" et que celle de l'élément Cr^{VI} contenu dans les fumées est égale à 0.05 mg/m³, comme le rapporte Cunat P.J., Le chrome dans les fumées de soudage des aciers inoxydables, Matériaux et Techniques, n°1-2 2002, la concentration maximale tolérée du Cr^{VI}, pour que celui-ci n'implique pas une réduction de la teneur maximale en fumées dans l'air respiré, doit être au maximum de 1%, c'est-à-dire (0.05/5)x100. En deçà de 1%, le Cr^{VI} n'est donc pas le facteur limitant la quantité de fumées admissible dans l'air respiré.

En comparaison, la VME du chrome trivalent (Cr^{III}) étant de 0.5 mg/m³, sa concentration maximale admissible dans les fumées, pour ne pas engendrer une réduction des fumées admissible dans l'air respiré, est de 10%.

De là, dans les ateliers de soudage, afin de limiter la quantité de fumées et la proportion en Cr^{VI} dans l'air respiré par les opérateurs en-dessous des valeurs maximales admissibles, la ventilation de l'atelier doit être très supérieure lors de l'utilisation de produits de soudage traditionnels des aciers inoxydables à celle nécessaire lors de l'emploi de produits pour aciers classiques.

Moyennant des ajustements de formulation d'une électrode enrobée traditionnelle, il est possible de réduire les fumées de soudage à la source. Ces modifications de formulation constituent ainsi le moyen le plus efficace pour limiter les nuisances engendrées dans l'environnement du soudeur, avant même de recourir à des équipements parfois lourds, tels des extracteurs de fumées.

Ceci est d'autant plus vrai que le procédé de soudage à l'électrode enrobée, de par sa facilité de mise en oeuvre, est très utilisé pour les soudures dans des espaces confinés dans certains ateliers ou chantiers, où il est parfois difficile de mettre en place une aspiration des fumées véritablement efficace.

Le principe de génération du Cr^{VI} dans les fumées est illustré par les équations [1] et [2] ci-dessous et réside dans la formation, lors du soudage, de certains composés nocifs, porteurs de l'élément Cr^{VI}, tels que par exemple Na ₂Cr^{VI}O₄, K₂Cr^{VI}O₄, NaK₃(Cr^{VI}O₄)₂, ou K₂NaCr^{VI}F₆, à partir de la réaction des éléments sodium (Na) et potassium (K) avec le chrome (Cr) entrant dans la composition de l'électrode.

2.Na + Cr + 2O₂ → Na₂Cr^{VI}O₄ [1]

2.K + Cr + 2O₂ → K₂Cr^{VI}O₄ [2]

Afin de diminuer les teneurs en ces composés porteurs de l'élément Cr^{VI} dans les fumées, le document de Kimura S., Kobayashi M., Godai T. and Mimato S., Investigations on chromium in stainless steel welding fumes, Welding Journal, p.195s-203s, Juillet 1979, a proposé de supprimer, dans les formules d'enrobages d'électrodes, tous les ingrédients contenant les éléments Na et K, et à les substituer par des ingrédients "équivalents" à base de lithium (Li).

Ainsi, il est connu d'opérer soit une substitution des feldspaths de Na ou K, tels que KAlSi₃O₈ ou NaAlSi₃O₈, présents dans les formules traditionnelles non écologiques d'enrobages pour électrodes par des composés de type alumino-silicates à base de Li aux propriétés très proches tels que la pétalite LiAtSi₄O₁₀, le spodumène LiAl(SiO₃)₂ ou l'eucryptite LiAlSiO₄, soit un remplacement des silicates de Na et K habituels par du silicate de Li.

Cependant, la mise en oeuvre de cette solution a toujours été difficile et n'a jamais pu être véritablement industrialisée car l'utilisation d'un liant au lithium en remplacement de liant(s) au sodium et/ou potassium conduit à des électrodes à l'enrobage fragile, voire très friable, rendant les électrodes ainsi formulées inutilisables en milieu industriel où les électrodes sont couramment soumises à des chocs accidentels ou à des manipulations peu délicates conduisant à leur détérioration rapide lorsqu'elles ne sont pas assez résistantes au plan mécanique.

Par ailleurs, les composés à base de Na et K, qu'ils soient sous la forme de poudres et/ou de silicates liquides, sont classiquement utilisés d'une manière quasi-systématique dans les enrobages d'électrodes enrobées pour conférer aux produits leurs bonnes caractéristiques d'arc, notamment stabilité et dynamisme d'arc. C'est pour cette raison que les électrodes formulées à base de silicate de lithium uniquement, donc sans Na et K, présentent une soudabilité opératoire très inférieure à celle des électrodes standard.

Le document tiré de l'expérience du groupe Boehler Thyssen Welding et publié par Spiegel-Ciobanu V.E., Entwicklung schadstoffarmer hoch legierter Cr-Ni-Schweisszusatze - Teil 1 : Reduktion des CrVI-Gehalts im Schweissrauc", Schweissen und Schneiden, 55(4), pp. 198-200, Mai 2003, décrit la difficulté de produire de telles électrodes inoxydables écologiques dépourvues de Na et K, du fait en particulier de leur faible résistance d'enrobage, et confirme leur niveau de soudabilité opératoire significativement inférieure à celle des produits inoxydables standard.

En définitive, bien que le principe de substitution des ingrédients contenant les éléments Na et K par des ingrédients "équivalents" à base de Li soit connu depuis longtemps pour l'abaissement du taux d'émission de fumées et de la quantité en Cr^{VI} dans les fumées, seul le document de Griffiths T. and Stevenson A.C., Development of stainless steel welding electrodes having a low level of toxic chromium in the fume, The 5th International Symposium of the Japan Welding Society, Advanced Technology in Welding, Materials Processing and Evaluation, 5JWS-IV-3, Tokyo, Avril 1990, décrit la fabrication d'électrodes inoxydables formulées à partir de silicate et composés de Li exclusivement, et à l'enrobage solide, à basses émissions de fumées et de Cru, et aux propriétés opératoires dites "satisfaisantes".

Toutefois, il s'avère en pratique que les propriétés opératoires de ces électrodes se sont révélées être très inférieures à celles des électrodes de type rutile dites "à fusion douce", si bien que, depuis la publication de ce document, aucune électrode de ce type n'est apparue sur le marché des électrodes inoxydables.

Par ailleurs, les documents O'Donnell D. and Bishel R., Stable low fume stainless steel welding electrode, Inco Alloys International Inc., 1991; US -A- 5,124,530 ; Koike Hiroyuki, Cr-contained coated electrode, Nippon Steel Corp., 1989, et JP-A-1249297 proposent, quant à eux, des électrodes inoxydables à émission de fumées réduites simplement, grâce à l'utilisation de silicates mixtes à base de Na, K et Li.

Toutefois, l'utilisation de silicates mixtes à base de Na, K et Li ne permet pas d'abaisser suffisamment la teneur en Cr^{VI} dans les fumées, du fait de la présence d'éléments Na et K conduisant à la formation inévitable de chrome hexavalent selon les mécanismes des formules (1) et (2) ci-avant.

Par ailleurs, plusieurs autres publications se sont intéressées aux émissions de fumées pendant le soudage et l'on peut citer, à titre indicatif, les documents suivants :
- Carter G., The effects of basic electrode coating formulation on fume emission rate and composition in manual metal arc welding of steel, Welding Institute Members Report 319, 1986,
- Dennis J., French M., Hewitt P., Mortazavi S. and Redding A., Control and Occupational exposure to hexavalent chromium and ozone in tubular wire arc welding processes by replacement of potassium by lithium or by addition of zinc, Ann. Occup. Hyg., Vol.46, No.1, pp.33-42, 2002,
- Griffiths T., Development of stainless steel welding electrodes having a low level of toxic chromium in the fume, Strasbourg seminar on welding fume: effects, control and protection, Paper 6, Abington UK, The Welding Institute, 1991,
- C. Bonnet, P. Rouault, B.Leduey, F. Richard and E. Bauné, Amélioration de l'environnement du soudeur par le biais de la formulation des consommables de soudage, Conference Proceedings des 6èmes Journées Nationales du Soudage, "Soudage et Prospective Industrielle", Tours, France, 21-25 Octobre, 2002, et
- E. Bauné, B. Leduey, F. Richard and P. Rouault ; Le soudage des aciers inoxydables à travers des exemples de l'évolution des consommables et des gaz, Proceedings du CIMATS Colloque Industriel, Université Technique de Belfort Montbéliard, 13 Décembre, 2002.

GB-A-1 581 182 divulgue une électrode de type rutile, pour soudage d'aciers inoxydables, et permettant de diminuer le volume des fumées, spécialement la quantité de chrome toxique, dégagées lors du soudage. L'enrobage contient moins de 1% en poids de (Na₂O + K₂O). Le liant est formé à partir d'une solution colloïdale contenant 1 à 90% en poids d'oxydes Si, Al, Zr, B, P, Ti, Mg, Ca, Th et/ou Fe. Cette solution peut contenir du silicate de lithium.

Au vu de l'état de la technique, le problème qui se pose est d'améliorer les électrodes enrobées destinées au soudage des aciers inoxydables de manière à :
- pouvoir atteindre un taux d'émission de fumées réduit d'un facteur allant jusqu'à 2, voire au-delà, par rapport aux électrodes inoxydables traditionnelles standard,
- pouvoir obtenir une proportion de Cr^{VI} inférieure à 1 % dans les fumées,
- avoir un enrobage solide et résistant, c'est-à-dire non friable, et
- pouvoir obtenir un niveau de soudabilité opératoire conforme aux exigences requises pour ce type d'électrodes, notamment en ce qui concerne leurs caractéristiques d'arc, d'aspect de cordon et de détachement de laitier.

Autrement dit, le problème qui se pose est de proposer une gamme de formulations d'électrodes enrobées écologiques, à l'enrobage solide, de type rutile à fusion douce, destinées au soudage des aciers inoxydables, conduisant à un métal déposé (après fusion) dont la composition chimique est conforme aux normes relatives aux différentes nuances d'aciers inoxydables, en particulier aux normes EN 1600 et AWS A5.4.

La solution de l'invention est une électrode enrobée formée d'une âme centrale métallique au moins partiellement recouverte d'un enrobage solide formant un revêtement sur ladite âme, ledit enrobage contenant du rutile et au moins un composé de lithium, de préférence en général un feldspath, et étant exempt de feldspath de sodium et de potassium, l'enrobage comprenant (le % en poids de chaque composé considéré étant exprimé par rapport au poids total d'enrobage de l'électrode) :
- de 5 à 45% en poids d'au moins un alumino-silicate à base de lithium ou de 0.2 à 3 % de lithium provenant d'au moins un alumino-silicate à base de lithium,
- au moins un agent de filage exempt de Na ou/et K,
- du silicate de lithium en tant que liant,
- environ 10 à 55% en poids d'un ou plusieurs éléments métalliques sous forme de ferro-alliages ou d'éléments seuls,
- une proportion totale dans l'enrobage de Na et K comprise entre 0 et 0.50% en poids.

Dans le cadre de l'invention, par "exempt" d'un composé donné, on entend que ledit composé n'a pas été volontairement inclus dans l'enrobage et qu'idéalement, ledit enrobage n'en contient pas du tout. Toutefois, la présence éventuelle de ce composé à l'état de traces en tant qu'impuretés inévitables n'est pas à exclure bien que non souhaitée. Des électrodes dont l'enrobage contiendrait dès lors de telles traces de composé seraient considérées comme étant incluses dans le champ de protection conféré pour la présente invention.

Selon le cas, l'électrode de l'invention peut comprendre l'une ou plusieurs des caractéristiques techniques suivantes :
- la proportion totale dans l'enrobage de Na et K est inférieure à 0.50%.
- l'âme centrale métallique est en acier inoxydable ou en acier doux,.
- le diamètre de l'âme est compris entre 1.6 et 6 mm, de préférence compris entre 2 et 4 mm.
- le (ou les) composé de lithium est choisi parmi les alumino-silicates à base de Li. Celui-ci (ou ceux-ci) a typiquement une formule générale chimique du type Li,Al,(SiₓO_{y}).
- au moins un feldspath de lithium est choisi parmi le spodumène, la pétalite et l'eucryptite. De préférence, les constituants d'enrobage à base de lithium, tels que spodumène LiAl(SiO₃)₂, pétalite LiAlSi₄O₁₀ et eucryptite LiAlSiO₄, sont présents dans l'enrobage en une proportion de 5 à 45% en poids, de préférence de 12 à 40% en poids dans l'enrobage.
- le liant contenant du lithium est du silicate de lithium, de formule typique (Li₂O)ₓ.(SiO₂)_{y}.(H₂O)_{z}. Lors de la préparation de l'enrobage, le silicate de lithium est introduit sous forme liquide dans une proportion supérieure à 105 g/kg de formule sèche, de préférence 120 à 220g en poids des matières premières (poudres sèches uniquement), de préférence encore de 150 à 200g, soit, en poids des éléments suivants exprimés par rapport au poids total d'enrobage de l'électrode, plus de 10% de Si et plus de 1.3% de Li, de préférence de 11 à 21 % de Si et de 1.5 à 2.9% Li, de préférence encore de 14 à 19% de Si et de 1.9 à 2.6% de Li.
- au moins un agent de filage est choisi dans le groupe formé par la carboxyméthylcellulose (CMC), l'hydroxyéthylcellulose ou toute autre substance organique ou résine soluble dans l'eau, l'alginate de calcium, les polymères d'origine végétale, tels que la gomme de guar, le talc (de formule typique 3MgO.4SiO2.H2O), ou encore l'argile (de formule typique Al₂O₃.2SiO₂.2H₂O).
- l'enrobage comprend environ de 10 à 55% (si âme en acier) en poids de l'enrobage d'un ou plusieurs éléments métalliques sous forme de ferro-alliages ou d'éléments seuls, la teneur en ce ou ces éléments métalliques étant équilibrée dans l'enrobage en fonction du type d'âme utilisé et de la nuance à souder (308L, 309L, 316L, 347L...selon la dénomination de la norme américaine AWS).
- les éléments métalliques sont choisis parmi le manganèse, le nickel, le chrome, le molybdène, le fer, le silicium, l'aluminium, le niobium, le titane, le tantale, le cuivre et leurs mélanges ou ferro-alliages comprenant ces éléments.
- elle comporte de 120 à 220 g de silicate de lithium liquide/kg de formule sèche, soit de 11 à 21 % de Si et de 1.5 à 2.9% de Li par rapport au poids total d'enrobage de l'électrode.
- l'enrobage contient, exprimé en % en poids dans l'enrobage, des composés servant à la constitution de l'enrobage dans les proportions suivantes : de 0.8 à 18.5% de Al₂O₃, de préférence de 2 à 16.5 % de Al₂O₃ (issu en particulier du ou des alumino-silicates de Li, et éventuellement d'autres poudres contenues dans la formule), de 5 à 40% de SiO₂, de préférence de 9 à 35% de SiO₂, (issus du ou des silicates de Li et des poudres d'enrobage dont les alumino-silicates de Li), de 15 à 45% de TiO₂, de préférence de 20 à 40% de TiO₂, de 2.8 à 8.5% de CaO, de préférence de 4 à 7.5% de CaO, de 0.5 à 5% de CaF₂, de préférence de 1 à 4% de CaF₂, et de 4 à 18% de carbonates, en particulier du CaCO₃, de préférence de 8 à 13% de carbonates.
- l'enrobage peut comporter, par ailleurs, au moins une poudre contenant un ou plusieurs éléments choisis parmi S, Se, Te, Sb et Bi.
- l'enrobage peut comporter, exprimé en % en poids dans l'enrobage de 0.01 à 2% en l'un ou plusieurs des éléments du groupe S, Bi, Te, Se et Sb, de préférence de 0.03 à 1.3%.
- l'enrobage peut contenir aussi, exprimé en % en poids dans l'enrobage, d'autres oxydes et fluorures, en une proportion de 0.5 à 10%, de préférence 3 à 7%.
- la répartition granulométrique du mélange sec (hors liant) est au minimum de 20% au delà de 100 µm, de préférence de 25 à 50%, et au maximum de 40% en deçà de 40 µm, de préférence de 5 à 30%.
- l'enrobage contient, exprimé en % en poids dans l'enrobage, de 4 à 18% de carbonates en poudre, en particulier du CaCO₃, de préférence de 8 à 13% de carbonates.

L'invention porte aussi sur un procédé de soudage à l'arc de l'acier inoxydable, dans lequel on utilise une électrode selon l'invention pour réaliser au moins un joint de soudure sur une ou plusieurs pièces à souder, ainsi que sur l'enrobage d'une telle électrode. L'opération de soudage à l'arc à l'électrode enrobée démarre lorsque l'opérateur initie l'arc de soudage en heurtant / frottant l'extrémité de son électrode sur la pièce, lesquelles électrode et pièces font partie intégrante de l'installation électrique, au même titre que le générateur de soudage, ceux-ci étant reliés les uns aux autres par l'ensemble des câbles de l'installation et la prise de masse. La chaleur intense ainsi produite provoque la fusion de l'extrémité de l'électrode et du métal de base à l'endroit de l'impact de l'arc ; le transfert de métal s'opère alors au travers de l'arc jusqu'à la pièce. Le métal est ainsi déposé sur la pièce au fur et à mesure que l'électrode se consume par fusion. L'opérateur doit alors veiller au maintien de l'arc en maintenant l'extrémité de l'électrode à une certaine hauteur de la pièce et en la déplaçant à une vitesse régulière le long de la pièce. Tandis que la soudure est déposée, une quantité de chaleur suffisante est maintenue pour fondre l'extrémité de l'électrode et la zone sous-jacente à l'arc sur la pièce à souder.

D'une manière générale, une électrode enrobée pour soudage à l'arc est une baguette conductrice du courant électrique appelée âme entourée d'un revêtement adhérent communément appelé enrobage, à l'extrémité de laquelle jaillit l'arc de soudage. L'énergie de l'arc est ainsi utilisée comme moyen de chauffage des pièces à assembler.

L'invention porte, en outre, sur un enrobage pour électrode contenant du rutile, comprenant le pourcentage (%) en poids de chaque composé étant exprimé par rapport au poids total d'enrobage de électrode :
- de 5 à 45% en poids d'au moins un alumino-silicate à base de lithium ou de 0.2 à 3.0% de lithium issu de l'ensemble des éléments servant à la constitution de l'enrobage sous forme poudres et liants, c'est-à-dire issu d'au moins un ou plusieurs composés de lithium sous forme de poudre et de silicate de lithium,
- au moins un agent de filage exempt de Na ou/et K,
- du silicate de lithium en tant que liant,
- environ 10 à 55% en poids d'un ou plusieurs éléments métalliques sous forme de ferro-alliages ou d'éléments seuls, et
- une proportion totale dans l'enrobage de Na et K comprise entre 0 et 0.50% en poids.

Lors de la mise au point de l'électrode enrobée, l'âme métallique est généralement choisie, dans la mesure des possibilités, de telle sorte que sa composition chimique corresponde à la nuance du métal de base à souder. Elle peut toutefois être aussi en acier doux, c'est-à-dire pratiquement sans élément d'alliage à l'exception d'une faible teneur en manganèse, les éléments d'alliages indispensables pour obtenir un dépôt de la nuance désirée étant alors apportés par l'enrobage ; on est alors en présence d'une électrode dite "synthétique". Quoi qu'il en soit, la teneur en éléments d'alliage de l'enrobage n'est jamais nulle car elle permet d'améliorer les caractéristiques mécaniques de la soudure et de compenser les pertes dues à la volatilisation des éléments métalliques au cours de la fusion de l'électrode lorsque une âme alliée dont l'analyse est proche de celle du métal à déposer est utilisée, ou d'apporter les éléments d'alliage nécessaires pour synthétiser la composition du métal à déposer lorsque l'on utilise une âme en acier doux.

L'enrobage a une influence capitale sur les caractéristiques de soudage et les propriétés résultantes du métal déposé. Ses rôles majeurs sont à la fois électrique, mécanique, et métallurgique.

Les principales fonctions que doivent assurer les ingrédients entrant dans la composition de l'enrobage sont multiples. La plupart des constituants peuvent avoir plus d'une fonction et la combinaison de plusieurs constituants selon des teneurs précises peut permettre la réalisation d'une fonction particulière.

Les différents constituants d'enrobage peuvent ainsi être classifiés selon différentes familles, à savoir les constituants sous forme de poudres et les constituants sous forme liquide.

Les constituants sous forme de poudres sont notamment :
- les agents de protection du métal déposé, c'est-à-dire les formeurs de gaz protecteurs et les constituants de laitier. Les formeurs de gaz protecteurs sont des poudres minérales dont la décomposition permet un dégagement gazeux (CO₂, CO, HF, H₂, H₂O sous forme vapeur, ...) et la protection contre l'air ambiant du métal en transit dans l'arc de soudage. Les constituants de laitier, quant à eux, sont des poudres minérales dont la transformation assure la formation du laitier qui enveloppe les gouttes de métal en transit dans l'arc et qui, en se solidifiant sur le cordon de soudure, assure sa protection de l'atmosphère extérieure ;
- les agents désoxydants, qui sont des poudres minérales permettant la purification de la soudure par la formation puis la décantation des oxydes et sulfures formés ;
- les initiateurs et stabilisateurs d'arc, qui sont des matières minérales et métalliques qui participent à l'initiation et au maintien stable de l'arc de soudage entre l'extrémité de l'électrode et la pièce à souder ;
- les éléments d'alliage (également désoxydants ou agents réducteurs), qui sont des matières métalliques qui permettent de palier aux pertes par volatilisation dans l'arc des éléments constituants l'âme métallique et d'enrichir le cordon en éléments métalliques ; ou de synthétiser l'analyse du métal à déposer lorsque l'on formule l'électrode à partir d'une âme en acier doux ;
- les agents régulateurs de la viscosité du laitier, qui sont des matières métalliques et minérales permettant le contrôle de l'intervalle de fusion et du temps que le laitier mettra pour se figer au cours de son refroidissement. Notamment, les éléments reconnus comme de puissants tensio-actifs peuvent s'avérer très efficaces ;
- les agents régulateurs du rendement de l'électrode c'est à dire du rapport entre la masse de métal déposé à la masse d'âme fondue, qui sont des matières métalliques permettant l'ajustement du taux de dépôt de l'électrode ;
- les agents d'extrusion (ou filants), qui sont des matières organiques permettant, en combinaison avec les liants et les poudres utilisées, l'obtention d'une bonne consistance de pâte et l'acquisition par celle-ci de ses propriétés rhéologiques en vue de son extrusion. Une bonne consistance de la pâte permet souvent d'obtenir une bonne résistance d'enrobage après cuisson.

Par ailleurs, les constituants sous forme liquide sont notamment les liants, qui le plus souvent sont des silicates liquides utilisés pour l'agglomération des poudres sèches constituant l'enrobage avant mise en forme de la pâte devant permettre l'extrusion.

Le mode de préparation du mélange entrant dans la composition de l'enrobage en vue de la fabrication d'une électrode enrobée s'effectue selon un mode opératoire qui se décompose de la façon suivante.

Les ingrédients sous forme sèche devant entrer dans la composition de l'enrobage sont tout d'abord pesés et mélangés afin d'obtenir un mélange homogène. Un (ou des) liant(s) est (sont) alors ajouté(s) en vue du mouillage du mélange sec au sein d'un malaxeur.

Après que les propriétés rhéologiques de la pâte d'enrobage aient été appréciées, celle-ci est mise en forme puis est effectuée l'extrusion concentrique de l'enrobage au moyen d'une presse à électrodes autour d'âmes métalliques préalablement coupées à la longueur requise.

La vérification du centrage de l'enrobage extrudé autour des âmes ou concentricité des électrodes s'ensuit alors-: un bon centrage est nécessaire à la qualité du produit final. Les extrémités des électrodes doivent alors être préparées par brossage de l'enrobage ; l'extrémité d'amorçage des électrodes est quant à elle préparée le plus souvent par graphitage ou aluminisation en fonction de la nature du produit.

Finalement, après un pré-séchage en atmosphère ambiante, les électrodes sont cuites en four. Cette cuisson peut s'opérer, par paliers ou non, jusqu'à une température de l'ordre de 350-500°C.

La présente invention va maintenant être mieux comprise grâce aux explications détaillées suivantes et aux figures annexées.

### Faible émission de fumées et faible teneur en Cr^{VI}

Afin de diminuer considérablement les teneurs en composés porteurs de l 'élément Cr^{VI} dans les fumées, les moyens de formulation mis en oeuvre consistent à adopter la solution classique visant à supprimer dans les formulations, tous les ingrédients contenant les éléments alcalins Na et K et à leur substituer des ingrédients 'équivalents' à base de lithium (Li).

Ainsi, on remplace les composés à base de Na et K (KAlSi₃O₈, NaAlSi ₃O₈) habituellement présents par des composés équivalents ou proches à base de Li, tels que le spodumène (LiAl(Si₂Oₛ)), la pétalite (LiAlSi₄O₁₀) ou l'eucryptite (LiAlSiO₄) par exemple.

Ces composés utilisés comme constituants d'enrobage ont comme principales fonctions de contrôler la viscosité du laitier liquide, de participer à la formation du laitier et donc à la protection du métal déposé, et de participer à la stabilisation de l'arc en cours de soudage.

Le Tableau 1 suivant illustre, pour 2 électrodes (A et B) de type 316L, avec âme centrale de diamètre égal à 2.5 mm en acier inoxydable de type 304L, formulées sur une même base de formulation et à partir d'un même silicate de lithium introduit sous forme liquide en quantité fixe au mouillage, l'influence du choix du type de feldspath sur la quantité de chrome hexavalent dans les fumées de soudage générées avec ces électrodes.

L'électrode de formule A est formulée à partir d'un ensemble de poudres sèches selon l'art antérieur, alors que l'électrode de formule B est constituée de poudres sèches selon l'invention, toutes deux fabriquées au moyen d'un silicate de lithium selon l'invention.

**Tableau 1**

| | Formule | | A | B |
|---|---|---|---|---|
| | | | (selon art antérieur) | (selon invention) |
| Matières premières (poudres + liant) entrant dans la composition de l'enrobage (% en poids dans l'enrobage) | Eléments métalliques divers | | 20.1% | |
| | Oxydes, carbonates, fluorures et autres filants | | 50.8% | |
| | Type d'alumino-silicate | | Feldspath de Na et K : | Spodumène (=composé de Li) : |
| | | | 24.9% | 24.9% |
| | Silicate de Li (partie sèche) | SiO2 | 3.62% | |
| | | Li2O | 0.52% | |
| | | Na2O | 0.06% | |
| Total : | | | 100% | |
| Cr^{VI} résultant dans les fumées | | | 2.7% | 0.6 % |
| Taux d'émission de fumées | | | 0.13 g/min | 0.08 g/min |

Comme on le voit dans le Tableau 1, la Formule B selon l'invention, formulée à partir de spodumène en substitution de feldspaths de Na et K utilisés dans la Formule A, engendre une concentration en Cr^{VI} dans les fumées de 0.6% au lieu de 2.7%, c'est-à-dire environ 4 fois inférieure.

De même, le taux d'émission de fumées de la Formule B selon l'invention est fortement abaissé par rapport à celui de la Formule A.

Par ailleurs, dans le cadre de la présente invention, il a également été nécessaire de se préoccuper des agents d'extrusion ou filants (agents de filage) qui sont utilisés pour la formulation des électrodes enrobées. En général, ce sont des matières organiques permettant, en combinaison avec les liants et les poudres utilisées, l'obtention d'une bonne consistance de pâte et l'acquisition par celle-ci de ses propriétés rhéologiques en vue de son extrusion autour de l'âme métallique de l'électrode.

De plus, une bonne consistance de la pâte permet d'obtenir une bonne résistance d'enrobage après cuisson. Par ailleurs, le choix des filants doit s'avérer judicieux puisque le séchage des électrodes conduit à leur décomposition en cendres au sein de l'enrobage dont le caractère hygroscopique est néfaste pour les électrodes.

Tout en prenant en compte cela, dans le cadre de la présente invention, il a été opéré une substitution de certains agents de filage constituant des enrobages d'électrodes classiques, qui contiennent traditionnellement des éléments Na ou K, par d'autres composés dépourvus de ces éléments. Ainsi, on préconise, dans le cadre de la présente invention, de proscrire totalement les agents de filage fréquemment utilisés, tels que les alginates de Na ou de K, et de les remplacer par d'autres agents de filage adaptés dans le cadre de l'invention, tels que la carboxyméthylcellulose (CMC), l'hydroxyéthylcellulose ou toute autre substance organique ou résine soluble dans l'eau, l'alginate de calcium, les polymères d'origine végétale, tels que la gomme de guar, le talc (de formule typique 3MgO.4SiO₂.H₂O), ou encore l'argile (de formule typique Al₂O₃.2SiO₂.2H₂O).

Ceci est illustré par la différence entre les électrodes C conforme à l'invention à l'exception des filants qui contiennent du Na et K selon l'art antérieur et D en tous points conforme à l'invention. Le Tableau 2 montre l'influence du remplacement des filants à base de Na et K (électrode de formule C) par des filants dépourvus de Na et K (électrode de formule D) sur la quantité en Cr^{VI} produite et le taux d'émission de fumées, et ce pour des électrodes de type fusion douce de même diamètre égal à 3.2 mm, fabriquées à partir de silicate de Li (sur la base de 3.62% de SiO₂ + 0.52% de Li₂O + 0.06% de Na₂O sous forme sèche en poids dans l'enrobage), pour les deux nuances d'aciers inoxydables 308L et 316L.

**Tableau 2**

| | Cr^{VI} résultant dans les fumées (%) | | Taux d'émission de fumées (g/min) | |
|---|---|---|---|---|
| Formule | C | D | C | D |
| | filants à base de Na et K | filants exempts de Na et K | filants à base de Na et K | filants exempts de Na et K |
| Nuance 308L | 0.8 | 0.7 | 0.13 | 0.11 |
| Nuance 316L | 0.9 | 0.7 | 0.13 | 0.10 |

Comme on peut le voir, l'électrode D selon l'invention conduit à un taux d'émission de fumées inférieur de près de 20% à celui de l'électrode C, ainsi qu'à une proportion en chrome VI également diminuée de plus de 10% par rapport à l'électrode C.

Par ailleurs, le Tableau 3 précise, pour les combinaisons de filants utilisées dans les formules C et D du Tableau 2, les teneurs en éléments Ca, Na et K correspondantes.

**Tableau 3**

| | Filants de la formule C | Filants de la formule D |
|---|---|---|
| Ca | 0.018 % | 0.020 % |
| Na | 0.072 % | 0.006 % |
| K | 0.041 % | 0.005 % |

Les pourcentage (%) sont exprimés en % en poids dans le constituant considéré.

Comme on peut le voir dans le Tableau 3, l'électrode enrobée D conforme à l'invention contient approximativement la même proportion de calcium que l'électrode C mais, par contre, contient environ 12 fois moins de Na et 8 fois moins de K.

La présence en éléments Na et K dans la combinaison de filants retenue pour la formule D provient de traces résiduelles de ces éléments. Malgré les précautions prises, la formule D n'est donc pas totalement exempte des éléments Na et K qui s'y retrouvent sous forme d'impuretés inévitables mais non volontairement souhaitées.

En outre, pour réaliser des formulations des électrodes inoxydables écologiques conformes à l'invention, il est aussi indispensable de remplacer les liants à base de Na et/ou K habituellement utilisés par du liant au Li pur.

Les liants sont généralement des silicates aqueux utilisés sous forme liquide pour l'agglomération des poudres sèches constituant l'enrobage avant mise en forme de la pâte devant permettre l'extrusion. La quantité de silicates utilisée doit être telle qu'un film fin soit établi entre les particules de poudres, le ou les silicates agissant comme un agent de pontage entre les poudres.

L'essentiel de l'eau contenue dans ces silicates est évacuée de l'enrobage, lors du cycle de cuisson final des électrodes, pour ne laisser alors dans l'enrobage que la partie sèche des silicates introduits, c'est-à-dire la partie alcaline composée des éléments Na20, K₂O et Li₂O.

La quantité optimale de liant à utiliser dépend principalement de sa viscosité, du couplage liant/filants retenu, ainsi que de la répartition granulométrique des poudres utilisées dans la formule.

Une des contraintes imposée pour la fabrication des électrodes inoxydables écologiques selon l'invention est d'utiliser du silicate de lithium, en remplacement des silicates de Na et/ou K traditionnels.

D'autre part, afin que la teneur en Cr^{VI} dans les fumées reste en deçà de l'objectif de 1% fixé, la quantité de silicate de lithium ne doit pas excéder une certaine quantité maximale puisqu'au delà de cette quantité maximale admissible, l'élément Cr^{VI} redevient le facteur limitant dans les fumées de soudage.

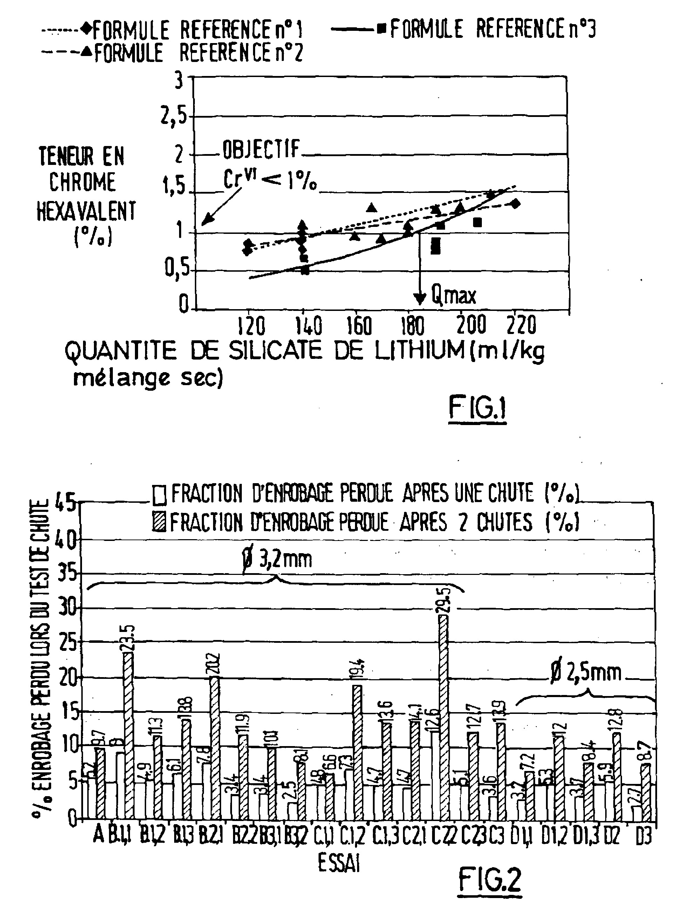

La Figure 1 montre l'existence d'une telle quantité maximale de silicate de lithium (Q_{max.}) à ne pas excéder, pour les différentes bases de formules inoxydables étudiées à l'origine du développement des électrodes inoxydables écologiques, alors que le Tableau 4 ci-après donne les compositions des enrobages des formules références n°1 à 3 de la Figure 1. Plus précisément, les courbes de la Figure 1 ont été établies en effectuant les substitutions de formulation des 3 exemples décrits ci-avant, tout en faisant varier la quantité de silicate de Li utilisé. Pour la formule référence n°3, la plus prometteuse en termes de réduction des fumées émises et performance opératoire (fusion douce, détachement de laitier, aspect de cordon) à l'origine du développement, Qₘₐₓ. a été définie dans la plage allant de 170 à 200 ml de liant au Li sous forme liquide par kg de mélange sec, c'est-à-dire sous forme sèche, dans la plage de 3.4 à 4 % en poids dans l'enrobage pour SiO₂, de 0.4 à 0.6% pour Li₂O et de 0.05 à 0.06% pour Na₂O.

**Tableau 4**

| | Formule référence | Formule référence | Formule référence |
|---|---|---|---|
| | n°1 | n°2 | n°3 |
| Diamètre âme métallique de nuance 304L (en mm) | 3.2 | 3.2 | 3.2 |
| Diamètre enrobage (en mm) | 5.65 | 5.30 | 5.60 |
| Matières premières (poudres hors liants) entrant dans la composition de l'enrobage (% en poids dans le mélange sec) | | | |
| Total matières métalliques | 22.3 | 27.0 | 22.6 |
| (dont total Cr) | (10.5) | (12.0) | (9.5) |
| Total filants | 0.8 | 1.8 | 2.2 |
| TiO₂ | 34.9 | 29.0 | 31.0 |
| CaCO₃ | 10.4 | 8.8 | 6.6 |
| CaF₂ | 3.9 | 3.2 | 2.8 |
| (K2O)ₓ.(Na2O)_{y}.(Al2O3)_{z}.(SiO2)ₖ (type Feldspath ou Mica) | 23.4 | 29.8 | 27.9 |
| (Al,Mg,Ca,Na).Si₄O₁₀.(OH) (type argile, bentonite) | 4.1 | 0 | 0 |
| Fe₂O₃ | 0 | 0 | 1.7 |
| Carbonates et fluorures divers | 0 | 0 | 4.7 |
| Sulfates et oxydes divers | 0.3 | 0.4 | 0.4 |
| Total | 100% | 100% | 100% |
| Liants (quantité introduite sous forme liquide en g/kg mélange sec) | | | |
| Liants "traditionnels" à base de Na / K correspondants : | | | |
| SiO₂ | 52 | 63 | 48 |
| Na₂O | 2.5 | 12 | 5 |
| K₂O | 22.5 | 19 | 17 |
| H₂O | 73-123 | 56-106 | 80-130 |
| Liants "écologiques" de substitution à base de Li correspondants selon l'invention: | | | |
| (Li₂₀)ₓ.(SiO₂)_{y}.(H₂O)_{z} | 120-220 | | |
| H₂O | 0-80 | | |
| Soit: | | | |
| SiO₂ | 25-46 | | |
| Li₂O | 3.5-6.5 | | |
| Na₂O | 0.3-0.6 | | |
| H₂O | 80-180 | | |

Le Tableau 5 illustre, pour 2 électrodes de nuance 316L de diamètre égal à 2.5 mm formulées sur une même base de formulation et à partir de spodumène, l'influence du choix du type de silicate, c'est-à-dire de liant, sur la quantité de Cr^{VI} dans les fumées de soudage et le taux d'émission de fumées.

**Tableau 5**

| Formule | | E | F |
|---|---|---|---|
| Matières premières (poudres hors liants) entrant dans la composition de l'enrobage (% en poids dans le mélange sec | Eléments métalliques divers | 21% | |
| | Oxydes, carbonates, fluorures et autres filants | 53% | |
| | Type d'alumino-silicate | Spodumène = composé à base de Li : 26% | |
| Silicate (sous forme liquide) : | | | |
| - quantité | | 180 g /kg | 180 g/kg |
| - type | | silicate de Li | silicate de Na/K |
| | | | |
| Cr^{VI} résultant dans les fumées | | 0.6 % | 3 % |
| Taux d'émission de fumées | | 0.08 g/min | 0.14 g/min |

La Formule E conforme à l'invention, formulée à partir de silicate de Li en substitution de silicates de Na/K dans la Formule F selon l'art antérieur, donne lieu à une concentration en Cr^{VI} dans les fumées de 0.6% au lieu de 3.0%., soit une réduction de 80%.

De même, le taux d'émission de fumées de la Formule E est fortement abaissé de près de 50% par rapport à celui de la Formule F.

### Solidité d'enrobage des électrodes enrobées

La viscosité des silicates de lithium utilisés dans le cadre de l'invention est généralement très faible, c'est-à-dire typiquement de 15 à 50 centipoises (cpo) à température ambiante (20°C), donc bien inférieure à celles des silicates de Na et/ou K traditionnels dont la gamme de viscosité va typiquement de 150 à 600 cpo. La densité du silicate de lithium entrant dans le cadre de l'invention se situe autour de 1.2.

En conséquence, du fait de la forte fluidité et des propriétés rhéologiques très spécifiques du silicate de lithium préconisé dans le cadre de l'invention, des difficultés importantes interviennent à différentes étapes du processus de fabrication des électrodes inoxydables écologiques, notamment :
- la faible viscosité du silicate de Li entraîne un manque de pouvoir collant de celui-ci et, par conséquent, conduit à des difficultés, d'une part, pour obtenir une bonne plasticité de la pâte servant à sa préparation, pendant les étapes de malaxage/mouillage et, d'autre part, de compactage et d'extrusion de la pâte et à sa mise en forme autour de l'âme métallique de l'électrode.
- la nature du silicate de Li engendre un phénomène de fragilisation de l'enrobage qui intervient lors du cycle de cuisson final des électrodes.

De là, sans précaution de formulation, les électrodes ainsi obtenues présentent des enrobages très fragiles et ne peuvent ainsi prétendre à être suffisamment résistantes au plan mécanique (chocs, chutes, frottements, pliage...) durant leur emballage, leur transport, et leur utilisation subséquente en environnement industriel.

Afin de pallier aux difficultés énoncées ci-dessus, il est nécessaire de non seulement judicieusement choisir les agents de filage (ex. CMC, gomme de guar, alginates), en particulier leur nature, quantité et combinaison, compatibles avec les exigences nécessaires à la formulation d'électrodes écologiques selon l'invention, mais aussi de contrôler la répartition granulométrique du mélange sec.

En respectant ces règles de formulation et en utilisant exclusivement le silicate de lithium comme liant, il est possible de fabriquer industriellement dans de bonnes conditions, des électrodes inoxydables écologiques de type fusion douce, à l'enrobage solide après leur cuisson.

Afin d'estimer quantitativement la solidité d'enrobage des électrodes fabriquées en cours du développement, un test de chute a été pratiqué.

Ce test consiste à faire chuter successivement 10 électrodes issues d'une même fabrication, d'une hauteur de 1 m sur une surface horizontale dure, par exemple un sol bétonné et d'exprimer la solidité de leurs enrobages en fraction en masse d'enrobage perdue après 1 chute, puis après 2 chutes.

Le résultat exprimé pour chaque série correspond à la moyenne calculée pour les 10 électrodes de la série considérée.

La Figure 2 illustre ainsi une série de résultats obtenus à partir d'un certain nombre de tests de chute d'électrodes (diamètres de 2.5 mm et 3.2 mm) issues de diverses fabrications, pour lesquelles des variations ont été apportées aux paramètres de formulation énumérés ci-avant.

Ces résultats montrent que les paramètres décrits influencent considérablement la résistance d'enrobage des électrodes correspondantes.

D'autre part, une bonne maîtrise du silicate de lithium utilisé, ainsi que des paramètres de formulation/fabrication, ont permis d'atteindre des niveaux de solidité d'enrobage équivalents à ceux d'électrodes inoxydables standard non écologiques, c'est-à-dire environ moins de 7% d'enrobage perdu après une chute pour des électrodes dont le diamètre de l'âme est inférieur ou égal à 3.2mm, et environ moins de 15% pour des électrodes dont le diamètre de l'âme est supérieur à 3.2mm. Il est également important de noter qu'en cours de soudage, aucun signe excessif ou anormal de fragilisation de l'enrobage ne se fait sentir sous l'effet de la chaleur de l'arc qui se propage le long de l'électrode. Ainsi, la fusion de l'enrobage en cours de soudage est conforme aux exigences requises pour de telles électrodes du type fusion douce.

Un autre test visant à juger de la résistance d'enrobage desdites électrodes et consistant à les plier autour d'une bouteille de gaz comprimé ayant un diamètre de 230 mm, a permis de confirmer la bonne solidité d'enrobage des électrodes écologiques formulées à partir de silicate de lithium selon la présente invention.

Par ailleurs, une autre série d'essais a consisté à fabriquer un certain nombre d'électrodes prototypes de type 316L en faisant varier la répartition granulométrique du mélange sec, tout en jouant sur le type de poudres de rutile (TiO₂) et de calcite (CaCO₃) utilisées, poudres non-métalliques majoritaires dans la constitution de l'enrobage des électrodes écologiques fusion douce.

Des essais croisés ont été réalisés par l'utilisation des feldspath et silicate à base de Na/K utilisés pour la fabrication des électrodes inoxydables traditionnelles, et du spodumène et silicate de Li exempts de Na/K, ces derniers étant nécessaires à la fabrication des électrodes inoxydables écologiques de l'invention.

Pour ces essais, des filants exempts de Na/K ont été utilisés.

La répartition granulométrique de ces poudres est présentée dans le Tableau 6.

**Tableau 6**

| Tamis (µm) | Poudre de constitution de l'enrobage et répartition granulométrique correspondante (fraction en poids % dans les diverses poudres) | | | | | | |
|---|---|---|---|---|---|---|---|
| | Rutile'fin' | Rutile'gros' | Calcite 'fine' | Calcite 'grosse' | Felsdpath de Na/K | Spodumène | Ensemble poudres métalliques + autres oxides, carbonates et fluorures |
| 315 | 0 | 0 | 0 | 2 | 0 | 0 | 2 |
| 250 | 0 | 0 | 0 | 12 | 0 | 0 | 7 |
| 200 | 0 | 0 | 0 | 10 | 0 | 0 | 4 |
| 160 | 0 | 3 | 0 | 16 | 0 | 0 | 9 |
| 125 | 0 | 43 | 0 | 24 | 3 | 0 | 24 |
| 100 | 0 | 40 | 0 | 20 | 4 | 0 | 12 |
| 80 | 0 | 14 | 0 | 0 | 19 | 3 | 17 |
| 63 | 0 | 0 | 2 | 0 | 12 | 16 | 12 |
| 50 | 0 | 0 | 2 | 15 | 5 | 10 | 5 |
| 40 | 1 | 0 | 1 | 0 | 2 | 4 | 3 |
| < ou = 40 | 99 | 0 | 95 | 1 | 55 | 67 | 5 |

| | | | | | | | |
|---|---|---|---|---|---|---|---|
| (fractions en poids % retenues sur tamis, obtenue par tamisage de la poudre considérée par ordre de tamis décroissants en taille) | | | | | | | |

Les données consignées dans les Tableaux 7a et 7b montrent l'importance de considérer une bonne répartition du mélange sec pour l'obtention d'électrodes à l'enrobage solide en proposant chacun une matrice d'essais pour la mise en évidence de l'influence de la nature des poudres d'enrobage et silicate utilisés sur la solidité d'enrobage des électrodes et leur caractère écologique.

**Tableau 7a**

| N° formule | 1 | 2 | 3 | 4 | 5 | 6 | 7 | 8 |
|---|---|---|---|---|---|---|---|---|
| Matières premières (poudres hors liants) entrant dans la composition de l'enrobage (% en poids dans le mélange sec) : | | | | | | | | |
| Ensemble poudres métalliques (Ni, Cr, Mo...) + autres oxydes, carbonates et fluorures | 25 | 25 | 25 | 25 | 25 | 25 | 25 | 25 |
| Feldspath de Na / K | 26 | 26 | 26 | 26 | 0 | 0 | 0 | 0 |
| Spodumène | 0 | 0 | 0 | 0 | 26 | 26 | 26 | 26 |
| Rutile "fin" | 37 | 37 | 0 | 0 | 37 | 37 | 0 | 0 |
| Rutile "gros" | 0 | 0 | 37 | 37 | 0 | 0 | 37 | 37 |
| Calcite "grosse" | 9 | 0 | 9 | 0 | 9 | 0 | 9 | 0 |
| Calcite "fine" | 0 | 9 | 0 | 9 | 0 | 9 | 0 | 9 |
| Silicate de Na/K (g sous forme liquide / kg de mélange sec) | 180 | | | | | | | |
| Silicate de Li (g sous forme liquide / kg de mélange sec) | 0 | | | | | | | |
| Caractéristiques résultantes des électrode ; | | | | | | | | |
| Solidité d'enrobage (1) | 5.6 | 8.7 | 9.9 | 8.0 | 2.3 | 1.2 | 7.9 | 7.1 |
| Conforme /Non conforme (2) | oui | x | x | x | oui | oui | x | x |
| Caractère écologique (3) | x | x | x | x | x | x | x | x |

| | | | | | | | | |
|---|---|---|---|---|---|---|---|---|
| (1) : perte en poids au test de chute en % conformément au test décrit pour les résultats de la Figure 2. (2) : pour évaluer la solidité des enrobages des électrodes, « x » signifie que l'enrobage est trop friable pour permettre l'emballage, le transport et l'utilisation de l'électrode en conditions industrielles ; « oui » signifie que la solidité d'enrobage des électrodes fabriquées est conforme et permet leur emballage, transport et utilisation dans de bonnes conditions. (3) : « x » signifie non conforme et « oui » signifie conforme. | | | | | | | | |

**Tableau 7b**

| N° formule | 9 | 10 | 11 | 12 | 13 | 14 | 15 | 16 |
|---|---|---|---|---|---|---|---|---|
| Matières premières (poudres hors liants) entrant dans la composition de l'enrobage (% en poids dans le mélange sec) : | | | | | | | | |
| Ensemble poudres métalliques (Ni, Cr, Mo...) + autres oxides, carbonates et fluorures | 25 | 25 | 25 | 25 | 25 | 25 | 25 | 25 |
| Feldspath de Na / K | 26 | 26 | 26 | 26 | 0 | 0 | 0 | 0 |
| Spodumène | 0 | 0 | 0 | 0 | 26 | 26 | 26 | 26 |
| Rutile "fin" | 37 | 37 | 0 | 0 | 37 | 37 | 0 | 0 |
| Rutile "gros" | 0 | 0 | 37 | 37 | 0 | 0 | 37 | 37 |
| Calcite "grosse" | 9 | 0 | 9 | 0 | 9 | 0 | 9 | 0 |
| Calcite "fine" | 0 | 9 | 0 | 9 | 0 | 9 | 0 | 9 |
| Silicate de Na/K (g sous forme liquide / kg de mélange sec) | 0 | | | | | | | |
| Silicate de Li (g sous forme liquide / kg de mélange sec) | 180 | | | | | | | |
| Caractéristiques résultantes des électrodes : | | | | | | | | |
| Solidité d'enrobage (1) | 11.4 | 13.3 | 12.4 | 12.7 | 7.4 | 8.2 | 5.6 | 4.4 |
| Conforme / Non conforme (2) | x | x | x | x | x | x | oui | oui |
| Caractère écologique (3) | x | x | x | x | oui | oui | oui | oui |

| | | | | | | | | |
|---|---|---|---|---|---|---|---|---|
| (1) : perte en poids au test de chute en % conformément au test décrit pour les résultats de la Figure 2.. (2) : pour évaluer la solidité des enrobages des électrodes, « x » signifie que l'enrobage est trop friable pour permettre l'emballage, le transport et l'utilisation de l'électrode en conditions industrielles ; « oui » signifie que la solidité d'enrobage des électrodes fabriquées est conforme et permet leur emballage, transport et utilisation dans de bonnes conditions. (3) : « x » signifie non conforme et « oui » signifie conforme. | | | | | | | | |

Il apparaît au vu de ces Tableaux 7a et 7b que l'utilisation simultanée/conjointe des ingrédients dits "écologiques", à savoir silicate de Li, spodumène, et filants exempts de Na/K rend la tâche encore plus délicate si l'on veut fabriquer des électrodes inoxydables écologiques à l'enrobage résistant.

La formulation de produits inoxydables de type fusion douce à basses émissions de fumées exige de recourir à un certain nombre de poudres de nature spécifique, selon des teneurs précises.

L'obtention d'électrodes inoxydables de type fusion douce écologiques solides est alors conditionnée par l'utilisation d'une répartition granulométrique non limitée aux faibles tamis uniquement, lorsqu'on utilise exclusivement les ingrédients à base de Li.

Ceci peut être obtenu par l'utilisation d'une poudre de rutile, composé en quantité majoritaire dans le flux d'enrobage, dont la répartition granulométrique se situe majoritairement au delà de 100 µm.

D'une manière générale, ceci est obtenu par l'utilisation conjointe d'une part importante du mélange dont la granulométrie moyenne est supérieure ou égale à 100 µm, avec une part secondaire de poudres fines, c'est-à-dire < 40µm.

### Performances opératoires des électrodes enrobées, en particulier fusion douce et détachement de laitier

La fusion traduit la manière dont fond l'électrode au cours du soudage. Elle caractérise le transfert des gouttes de métal et de l'enrobage fondu qui prend place entre l'électrode qui se consume et le bain de fusion sur la pièce à souder.

Une fusion qui s'effectue avec un transfert de gouttes majoritairement fines est qualifiée de fusion douce. Elle se caractérise dans ce cas par un souffle régulier, de faible intensité sonore, auquel se superpose un léger crépitement, et elle est signe d'un confort d'utilisation évident pour le soudeur.

Une fusion douce s'accompagne d'une très faible quantité de projections en cours de soudage. Celles ci sont très fines lorsqu'elles existent,. Les projections représentent les quantités de métal qui sont éjectées hors de l'arc en cours de soudage ou qui résultent de l'éclaboussement des gouttes de métal liquide dans le bain de fusion.

En soudage à plat, la suite de laitier est la ligne définissant la limite entre le bain de fusion, c'est-à-dire le métal liquide, à la pointe de l'électrode et le laitier liquide surnageant en surface.

Puisqu'elle définit la taille du bain de fusion, la forme et la stabilité de la suite de laitier conditionne la forme et la régularité du cordon sous-jacent et, en particulier, la finesse et la régularité des stries à la surface du cordon après solidification.

Pour une électrode de type "fusion douce", la suite de laitier est généralement très proche de la pointe de l'électrode derrière la base de l'arc.

La formulation d'une électrode de type fusion douce doit donc être telle que la suite de laitier apparaisse calme et stable car sinon, elle peut constituer une gène pour le soudeur et peut engendrer des défauts d'aspect de cordon (stries irrégulièrement espacées, plus ou moins marquées...), voire des inclusions de laitier dans le dépôt.

D'une manière générale, la formulation d'une électrode fusion douce doit permettre l'obtention d'une fusion et d'une suite de laitier stables.

Outre l'aspect opératoire en cours de soudage, une électrode inoxydable de type fusion douce se caractérise par :
- en soudage en angle à plat, un aspect de cordon généralement plat, voire concave,
- des stries fines et régulièrement espacées les unes des autres,
- un cordon stable et régulier,
- bien évidemment, un cordon exempts de défauts, tels que caniveaux, adhérences de laitier, fissures ou piqûres,
- un détachement de laitier aisé, voire auto-détachable sur toute sa longueur ou sur certaines parties.

Dans les formules de type rutile à fusion douce, des éléments tensio-actifs, tels que Sb, Bi, Se, Te, S doivent être judicieusement contrôlés dans les enrobages pour obtenir un bon détachement de laitier sans que les performances opératoires et/ou la résistance de l'enrobage du produit ne soient affectées.

Les Tableaux 8a et 8b montrent que l'obtention d'une électrode inoxydable écologique conforme à l'invention, de type à fusion douce et à enrobage solide, est conditionnée par l'utilisation d'un certain nombre de matières premières dont les proportions doivent être judicieusement contrôlées.

Plus précisément, dans les Tableaux 8a et 8b sont consignées des matrices d'essais de mise en évidence de l'influence de la nature des poudres d'enrobage utilisées sur les performances opératoires des électrodes et la solidité de leur enrobage.

**Tableau 8a**

| N° formule | | 1 | 2 | 3 | 4 | 5 | 6 | 7 | 8 |
|---|---|---|---|---|---|---|---|---|---|
| Matières premières (poudres + liants) entrant dans la composition de l'enrobage (% en poids dans l'enrobage) | Rutile | 35.4 | 35.4 | 35.4 | 35.4 | 35.4 | 35.4 | 35.4 | 35.4 |
| | Divers carbonates | 9.6 | 9.6 | 9.6 | 9.6 | 1.9 | 1.9 | 1.9 | 1.9 |
| | S issu de sulfates divers | 0.7 | 0.7 | 0 | 0 | 0.7 | 0.7 | 0 | 0 |
| | Quantité totale en Sb, Bi, Se et Te | 0.4 | 0 | 0.4 | 0 | 0.4 | 0 | 0.4 | 0 |
| | Silicate de Li (partie sèche, c-à-d SiO₂ + Li₂O + traces dont Na₂O) | 4.2 | 4.2 | 4.2 | 4.2 | 4.2 | 4.2 | 4.2 | 4.2 |
| Caractéristiques résultantes des électrodes : | | | | | | | | | |
| Fusion douce avec peu projections | | oui | oui | oui | oui | oui | oui | oui | oui |
| Fusion / suite stables | | x | oui | oui | oui | x | x | x | x |
| Détachement laitier | | oui | oui | oui | x | oui | oui | oui | x |
| Aspect de cordon | | x | oui | oui | oui | x | x | x | x |
| Solidité d'enrobage | | x | x | oui | oui | x | x | oui | oui |

| | | | | | | | | | |
|---|---|---|---|---|---|---|---|---|---|
| « x » signifie non conforme et « oui » signifie conforme | | | | | | | | | |

**Tableau 8b**

| N° formule | | 9 | 10 | 11 | 12 | 13 | 14 | 15 | 16 |
|---|---|---|---|---|---|---|---|---|---|
| Matières premières (poudres + liants) entrant dans la composition de l'enrobage (% en poids dans l'enrobage) | Rutile | 14.3 | 14.3 | 14.3 | 14.3 | 14.3 | 14.3 | 14.3 | 14.3 |
| | Divers carbonates | 9.6 | 9.6 | 9.6 | 9.6 | 1.9 | 1.9 | 1.9 | 1.9 |
| | S issu de sulfates divers | 0.7 | 0.7 | 0 | 0 | 0.7 | 0.7 | 0 | 0 |
| | Quantité totale en Sb, Bi, Se et Te | 0.4 | 0 | 0.4 | 0 | 0.4 | 0 | 0.4 | 0 |
| | Silicate de Li (partie sèche, c-à-d SiO₂ + Li₂O + traces dont Na₂O) | 4.2 | 4.2 | 4.2 | 4.2 | 4.2 | 4.2 | 4.2 | 4.2 |
| Caractéristiques résultantes des électrodes : | | | | | | | | | |
| Fusion douce avec peu projections | | x | x | x | x | x | x | x | x |
| Fusion / suite stables | | x | oui | oui | oui | x | x | x | x |
| Détachement laitier | | oui | oui | oui | x | oui | oui | oui | x |
| Aspect de cordon | | x | x | x | oui | x | x | x | oui |
| Solidité d'enrobage | | x | x | oui | oui | x | x | oui | oui |

| | | | | | | | | | |
|---|---|---|---|---|---|---|---|---|---|
| « x » signifie non conforme et « oui » signifie conforme | | | | | | | | | |

### Caractéristiques du produit final

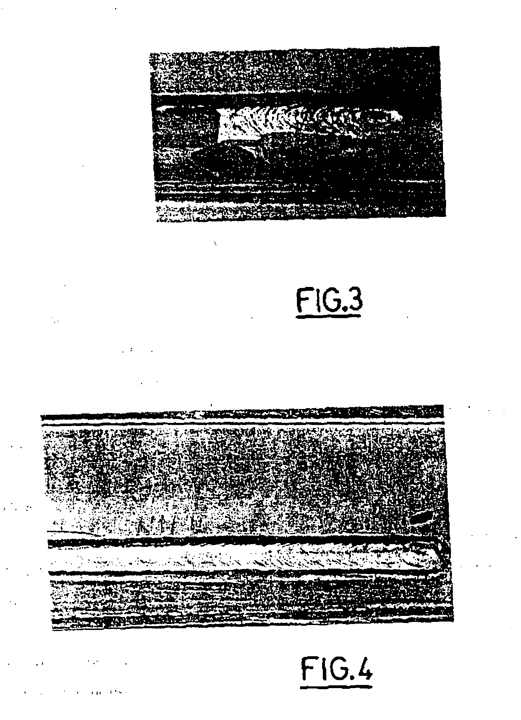

Le Tableau 9 ci-après résume l'ensemble des principes fondamentaux de formulation/fabrication des électrodes inoxydables écologiques selon invention qu'il est nécessaire de respecter pour l'optimisation de leurs principales propriétés, à savoir une émissions de fumées réduites, une faible teneur en chrome hexavalent, inférieure à 1% dans les fumées, une fabrication possible, un enrobage solide, une bonne soudabilité opératoire, (c'est-à-dire fusion douce, arc stable, peu ou pas de projections), et un cordon de soudage de bel aspect, sain, propre, uniforme, brillant, et finement strié, avec bon mouillage, comme montré sur les photos des Figures 3 et 4, et un bon détachement de laitier, comme montré en Figure 3.

**Tableau 9**

| Conditions nécessaires lors de la formulation de l'électrode afin d'obtenir de bonnes propriétés de celle-ci | Principales propriétés des électrodes | | | | | |
|---|---|---|---|---|---|---|
| | Taux d'émission de fumes faible | Niveau de Cr^{VI} faible dans les fumées | Fabrication possible de l'électrode | Bonne résistance de l'enrobage de l'électrode | Bonne performance opératoire (*) | Elimination et nettoyage du laitier faciles |
| Utilisation de silicate de lithium | X | X | | | | |
| Utilisation d'une quantité maximale admissible de silicate de lithium | X | X | | | | |
| Utilisation d'agents d'extrusion particuliers | X | X | X | X | | |
| Utilisation de combinaisons choisies d'agents d'extrusion particuliers | | | X | X | | |
| Distribution granulométrique des poudres | | | X | X | X | X |
| Absence de sodium et de potassium par substitution de poudres (feldspath) par poudres similaires à base de Li (spodumène, pétalite...) | X | X | | | | |
| Usage d'éléments tensio-actifs appropriés et combinaison | | | X | X | X | X |

| | | | | | | |
|---|---|---|---|---|---|---|
| (*) : c'est-à-dire fusion douce, arc stable, peu ou pas de projections, et cordon de soudage de bel aspect, sain, propre, uniforme, brillant, et finement strié, avec bon mouillage. | | | | | | |

Le Tableau 10 suivant montre, quant à lui, le caractère unique des électrodes inoxydables écologiques de l'invention fabriquées au moyen de silicate de lithium et poudres de substitution à base de Li par rapport aux électrodes inoxydables « traditionnelles » non écologiques formulées à partir de silicates de Na et/ou K et autres ingrédients contenant les éléments Na et K.

Les électrodes inoxydables écologiques de l'invention permettent de réduire de 25% à 98% les émissions de fumées par rapport aux électrodes inoxydables standard et conduisent à une teneur en Cr^{VI} (exprimée en % dans les fumées) de 4 à 5 fois inférieure à celles des électrodes standard.

Seules les électrodes écologiques de l'invention engendrent une faible teneur en chrome hexavalent, qui est de surcroît inférieure à 1%, ce qui implique que le Cr^{VI} n'est plus le facteur déterminant de la toxicité des fumées et dès lors la quantité en Cr^{VI} émis (exprimée en g/min) est de 5 à 9 fois inférieure à celles des électrodes inoxydables standard.

**Tableau 10**

| | Taux d'émission de fumées (g/min) | Teneur en Cr^{VI} dans les fumées de soudage (%) | Taux d'émission de Cr^{VI} dans les fumées de soudage (g/min) |
|---|---|---|---|
| Electrodes « traditionnelles » non écologiques formulées à partir de Na et K | 0.15 à 0.19 | 2.2 à 3.2 | 0.30 à 0.60 |
| Electrodes écologiques formulées à partir de Li | 0.10 à 0.11 | 0.5 à 0.6 | 0.05 à 0.07 |

Les valeurs indiquées ci-dessus correspondent à des électrodes formulées sur âme de diamètre de 3.2 mm, nuance 316L.

La comparaison des analyses des fumées émises par ces différentes électrodes illustre leur différence de formulation (voir Tableau 11).

**Tableau 11**

| | Analyse des fumées (% en poids par rapport au poids total des fumées collectées) | | |
|---|---|---|---|
| | K | Na | Li |
| Electrodes "traditionnelles" non écologiques formulées à partir de Na et K | 24 à 38 % | 1 à 7 % | 0.1 à 0.4% |
| Electrodes écologiques formulées à partir de Li | 1 à 1.5 % | 1 à 1.5 % | 4 à 6 % |

Les valeurs indiquées ci-dessus correspondent à des électrodes de nuance 316L, diamètres de 2.5 et 3.2 mm.

## Revendications

1. Electrode enrobée formée d'une âme centrale métallique au moins partiellement recouverte d'un enrobage solide formant un revêtement sur ladite âme, ledit enrobage contenant du rutile et au moins un composé à base de lithium et étant exempt de feldspath de sodium et de potassium, l'enrobage comprenant, le pourcentage (%) en poids de chaque composé étant exprimé par rapport au poids total d'enrobage de l'électrode :
- de 5 à 45% en poids d'au moins un alumino-silicate à base de lithium ou de 0.2 à 3 % de lithium provenant d'au moins un alumino-silicate à base de lithium,
- au moins un agent de filage exempt de Na ou/et K,
- du silicate de lithium en tant que liant,
- environ 10 à 55% en poids d'un ou plusieurs éléments métalliques sous forme de ferro-alliages ou d'éléments seuls, et
- une proportion totale dans l'enrobage de Na et K dont la somme est comprise entre 0 et 1% en poids.

2. Electrode selon la revendication 1, **caractérisée en ce que** l'âme centrale métallique est en acier doux ou en acier inoxydable.

3. Electrode selon l'une des revendications 1 ou 2, **caractérisée en ce que** le diamètre de l'âme est compris entre 1.6 et 6 mm, de préférence compris entre 2.5 et 4 mm.

4. Electrode selon l'une des revendications 1 ou 2, **caractérisée en ce qu'**au moins un alumino-silicate, notamment au moins un feldspath de lithium, est choisi parmi le spodumène, la pétalite et l'eucryptite.

5. Electrode selon l'une des revendications 1 à 4, **caractérisée en ce qu'**elle comporte, en poids des éléments exprimés par rapport au poids total d'enrobage de l'électrode, plus de 10% de Si et plus de 1.3% de Li, de préférence de 11 à 21 % de Si et de 1.5à2.9%Li.

6. Electrode selon l'une des revendications 1 à 5, **caractérisée en ce que** la proportion totale dans l'enrobage de Na et K est inférieure ou égale à 0.50% en poids.

7. Electrode selon l'une des revendications 1 à 6, **caractérisée en ce qu'**au moins un agent de filage est choisi dans le groupe formé par la carboxyméthylcellulose (CMC), l'hydroxyéthylcellulose, les substances organiques ou résines solubles dans l'eau, l'alginate de calcium, les polymères d'origine végétale, tels que la gomme de guar, ou le talc (de formule typique 3MgO.4SiO₂.H₂O) et l'argile (de formule typique Al₂O₃.2SiO₂.2H₂O).

8. Electrode selon l'une des revendications 1 à 7, **caractérisée en ce que** l'enrobage comprend environ au moins 20 % en poids de l'enrobage d'un ou plusieurs éléments métalliques sous forme de ferro-alliages ou d'éléments seuls choisis parmi le manganèse, le nickel, le chrome, le molybdène, le fer, le silicium, l'aluminium, le niobium, le tantale, le cuivre et leurs mélanges.

9. Electrode selon l'une des revendications 1 ou 8, **caractérisée en ce qu'**elle comporte de 11 à 21 % de Si et de 1.5 à 2.9% de Li par rapport au poids total d'enrobage de l'électrode.

10. Electrode selon l'une des revendications 1 à 9, **caractérisée en ce que** l'enrobage contient, exprimé en % en poids dans l'enrobage, des poudres servant à la constitution de l'enrobage dans les proportions suivantes:
- de 0.8 à 18.5% de Al₂O₃, de préférence de 2 à 16.5% de Al₂O₃,
- de 5 à 40% de SiO₂, de préférence de 9 à 35% de SiO₂
- de 15 à 45% deTiO₂, de préférence de 20 à 40% deTiO₂,
- de 2.8 à 8.5% de CaO, de préférence de 4 à 7.5% de CaO,
- de 0.5 à 5% de CaF₂, de préférence de 1 à 4% de CaF₂.

11. Electrode selon l'une des revendications 1 à 10, **caractérisée en ce que** l'enrobage contient, exprimé en % en poids total dans l'enrobage de l'électrode, des éléments servant à la constitution de l'enrobage dans les proportions suivantes:
- de 0.4 à 10.0% de Al, de préférence de 1 à 9% de Al,
- de 2.0 à 19.0% de Si, de préférence de 4 à 17% de Si,
- de 9.0 à 27.0% de Ti, de préférence de 12 à 24% de Ti,
- de 0.2 à 3.0% de Ca, de préférence de 0.5 à 2.5% de Ca, et
- de 0.2 à 3.0% de Li, de préférence de 0.4 à 2.6% de Li.

12. Electrode selon l'une des revendications 1 à 11, **caractérisée en ce que** l'enrobage est obtenu à partir d'un mélange sec de poudres d'enrobage formé d'au moins 17% en poids dans la formule sèche de particules de granulométrie supérieure ou égale à 100 µm et d'au moins 8% de particules fines de granulométrie inférieure ou égale à 40 µm.

13. Electrode selon l'une des revendications 1 à 12, **caractérisée en ce que** la quantité de matière se détachant de l'enrobage après un test de chute, dans lequel l'électrode subit une chute libre verticale d'une hauteur de 1 mètre sur une surface horizontale dure est inférieure ou égale à environ 15% en poids par rapport au poids total de l'enrobage pour des électrodes dont le diamètre d'âme est compris entre 1.6 et 6 mm, de préférence inférieure ou égale à environ 7% pour des électrodes dont le diamètre d'âme est inférieur à 3.2 mm.

14. Electrode selon l'une des revendications 1 à 10, **caractérisée en ce que** l'enrobage contient, exprimé en % en poids dans l'enrobage, de 4 à 18% de carbonates en poudre, en particulier du CaCO₃, de préférence de 8 à 13% de carbonates.

15. Procédé de soudage à l'arc d'une ou plusieurs pièces à souder en acier inoxydable, dans lequel on utilise une électrode selon l'une des revendications 1 à 14 pour réaliser au moins un joint de soudure sur la ou lesdites pièces à souder.

16. Enrobage pour électrode contenant du rutile et comprenant, le pourcentage (%) en poids de chaque composé étant exprimé par rapport au poids total d'enrobage de l'électrode :
- de 5 à 45% en poids d'au moins un alumino-silicate à base de lithium ou au total de 0.2 à 3% de lithium issu de l'ensemble des éléments servant à la constitution de l'enrobage sous forme poudres et liants,
- au moins un agent de filage exempt de Na ou/et K,
- du silicate de lithium en tant que liant,
- environ 10 à 55% en poids d'un ou plusieurs éléments métalliques sous forme de ferro-alliages ou d'éléments seuls, et
- une proportion totale dans l'enrobage de Na et K comprise entre 0 et 0.5% en poids.

## Claims

1. Coated electrode formed from a central metal core at least partly covered with a robust coating forming a covering over the said core, the said coating containing rutile and at least one lithium-based compound and being free of sodium feldspar and potassium feldspar, which coating comprises, the percentage (%) by weight of each compound being expressed relative to the total weight of coating of the electrode:
- 5 to 45% by weight of at least one lithium-based aluminosilicate or 0.2 to 3% lithium coming from at least one lithium-based aluminosilicate;
- at least one extrusion agent free of Na and/or K;
- lithium silicate as binder;
- about 10 to 55% by weight of one or more metal elements in the form of ferro-alloys or of individual elements; and
- a total proportion of Na and K in the coating, the sum of which is between 0 and 1% by weight.

2. Electrode according to Claim 1, **characterized in that** the central metal core is made of stainless steel or of mild steel.

3. Electrode according to either of Claims 1 and 2, **characterized in that** the diameter of the core is between 1.6 and 6 mm, preferably between 2.5 and 4 mm.

4. Electrode according to either of Claims 1 and 2, **characterized in that** at least one aluminosilicate, especially at least one lithium feldspar, is chosen from spodumene, petalite and eucryptite.

5. Electrode according to one of Claims 1 to 4, **characterized in that** it contains, by weight of the elements expressed relative to the total weight of coating of the electrode, more than 10% Si and more than 1.3% Li, preferably 11 to 21% Si and 1.5 to 2.9% Li.

6. Electrode according to one of Claims 1 to 5, **characterized in that** the total proportion of Na and K in the coating is less than or equal to 0.50% by weight.

7. Electrode according to one of Claims 1 to 6, **characterized in that** at least one extrusion agent is chosen from the group formed by carboxymethylcellulose (CMC), hydroxyethylcellulose, water-soluble organic substances or resins, calcium alginate, plant-based polymers, such as guar gum, talc (with a typical formula of 3MgO.4SiO₂.H₂O), or else clay (with a typical formula of Al₂O₃.2SiO₂.2H₂O).

8. Electrode according to one of Claims 1 to 7, **characterized in that** the coating comprises at least about 20%, by weight of the coating, of one or more metallic elements in the form of ferro-alloys or of individual elements chosen from manganese, nickel, chromium, molybdenum, iron, silicon, aluminium, niobium, tantalum and copper, and their blends.

9. Electrode according to either of Claims 1 and 8, **characterized in that** it contains 11 to 21% Si and 1.5 to 2.9% Li relative to the total weight of coating of the electrode.

10. Electrode according to one of Claims 1 to 9, **characterized in that** the coating contains, expressed as a percentage by weight in the coating, powders used for making up the coating in the following proportions:
- 0.8 to 18.5% Al₂O₃, preferably 2 to 16.5% Al₂O₃;
- 5 to 40% SiO₂, preferably 9 to 35% SiO₂;
- 15 to 45% TiO₂, preferably 20 to 40% TiO₂;
- 2.8 to 8.5% CaO, preferably 4 to 7.5% CaO; and
- 0.5 to 5% CaF₂, preferably 1 to 4% CaF₂.

11. Electrode according to one of Claims 1 to 10, **characterized in that** the coating contains, expressed as a percentage by total weight in the electrode coating, elements serving for making up the coating in the following proportions:
- 0.4 to 10.0% Al, preferably 1 to 9% Al;
- 2.0 to 19.0% Si, preferably 4 to 17% Si;
- 9.0 to 27.0% Ti, preferably 12 to 24% Ti;
- 0.2 to 3.0% Ca, preferably 0.5 to 2.5% Ca; and
- 0.2 to 3.0% Li, preferably 0.4 to 2.6% Li.

12. Electrode according to one of Claims 1 to 11, **characterized in that** the coating is obtained from a dry blend of coating powders, formed from at least 17% by weight in the dry formulation of particles with a particle size greater than or equal to 100 µm and of at least 8% of fine particles with a particle size of less than or equal to 40 µm.

13. Electrode according to one of Claims 1 to 12, **characterized in that** the amount of material detaching from the coating after a drop test, in which the electrode undergoes a vertical freefall from a height of 1 metre onto a hard horizontal surface, is about 15% or less by weight relative to the total weight of the coating for electrodes having a core diameter of between 1.6 and 6 mm, and preferably about 7% or less for electrodes whose core diameter is less than 3.2 mm.

14. Electrode according to one of Claims 1 to 10, **characterized in that** the coating contains, expressed in % by weight in the coating, from 4 to 18% carbonates in powder form, in particular CaCO₃, preferably 8 to 13% carbonates.

15. Process for the arc welding of one or more stainless steel workpieces to be welded, in which an electrode according to one of Claims 1 to 14 is used for producing at least one welded joint on the said workpiece or workpieces to be welded.

16. Electrode coating that contains rutile and comprises, the percentage (%) by weight of each compound being expressed relative to the total weight of coating of the electrode:
- 5 to 45% by weight of at least one lithium-based aluminosilicate or in total 0.2 to 3% lithium resulting from the combination of elements used for the formulation of the coating in the form of powders and binders;
- at least one extrusion agent free of Na and/or K;
- lithium silicate as binder;
- about 10 to 55% by weight of one or more metal elements in the form of ferro-alloys or of individual elements; and
- a total proportion of Na and K in the coating of between 0 and 0.5% by weight.

## Patentansprüche

1. Umhüllte Elektrode, gebildet aus einem zentralen metallischen Kern, der mindestens teilweise von einer feststofflichen Umhüllung bedeckt ist, welche auf dem Kern eine Beschichtung bildet, wobei die Umhüllung Rutil und mindestens eine Verbindung auf Basis von Lithium enthält und frei von Natrium- und Kaliumfeldspat ist, wobei die Umhüllung Folgendes umfasst, wobei die Gewichtsprozente (%) für jede Verbindung unter Bezugnahme auf das Gesamtgewicht der Elektrodenumhüllung ausgedrückt sind:
- 5 bis 45 Gew.-% mindestens eines Aluminosilikats auf Basis von Lithium oder 0,2 bis 3% Lithium, das aus mindestens einem Aluminosilikat auf Basis von Lithium stammt,
- mindestens einen Extrusionshilfsstoff, der frei von Na und/oder K ist,
- Lithiumsilikat als Bindemittel,
- ungefähr 10 bis 55 Gew.-% eines oder mehrerer metallischer Elemente in Form von Ferrolegierungen oder einzelnen Elementen, und
- einen Gesamtanteil von Na und K in der Umhüllung, dessen Summe 0 bis 1 Gew.-% beträgt.

2. Elektrode nach Anspruch 1, **dadurch gekennzeichnet, dass** der zentrale metallische Kern aus Weichstahl oder aus nicht rostendem Stahl besteht.

3. Elektrode nach Anspruch 1 oder 2, **dadurch gekennzeichnet, dass** der Durchmesser des Kerns 1,8 bis 6 mm, vorzugsweise 2,5 bis 4 mm beträgt.

4. Elektrode nach Anspruch 1 oder 2, **dadurch gekennzeichnet, dass** mindestens ein Aluminosilikat, insbesondere mindestens ein Lithiumfeldspat, aus Spodumen, Petalit und Eukryptit gewählt ist.

5. Elektrode nach einem der Ansprüche 1 bis 4, **dadurch gekennzeichnet, dass** sie, wenn das Gewicht der Elemente unter Bezugnahme auf das Gesamtgewicht der Elektrodenumhüllung ausgedrückt wird, mehr als 10% an Si und mehr als 1,3% an Li, vorzugsweise 11 bis 21% an Si und 1,5 bis 2,9% an Li, aufweist.

6. Elektrode nach einem der Ansprüche 1 bis 5, **dadurch gekennzeichnet, dass** der Gesamtanteil an Na und K in der Umhüllung kleiner-gleich 0,50 Gew.-% beträgt.

7. Elektrode nach einem der Ansprüche 1 bis 6, **dadurch gekennzeichnet, dass** mindestens ein Extrusionshilfsstoff aus der Gruppe gewählt ist, die von Carboxymethylcellulose (CMC), Hydroxyethylcellulose, wasserlöslichen organischen Substanzen oder Harzen, Calciumalginat, Polymeren pflanzlicher Herkunft wie etwa Guargummi oder aus Talkum (mit der typischen Formel 3MgO.4SiO₂.H₂O) und Ton (mit der typischen Formel Al₂O₃.2SiO₂.2H₂O) gebildet ist.

8. Elektrode nach einem der Ansprüche 1 bis 7, **dadurch gekennzeichnet, dass** die Umhüllung ungefähr mindestens 20 Ges.-% der Umhüllung an einem oder mehreren metallischen Elementen in Form von Ferrolegierungen oder einzelnen Elementen, die aus Mangan, Nickel, Chrom, Molybdän, Eisen, Silizium, Aluminium, Niob, Tantal, Kupfer und deren Mischungen gewählt sind, umfasst.

9. Elektrode nach einem der Ansprüche 1 bis 8, **dadurch gekennzeichnet, dass** sie unter Bezugnahme auf das Gesamtgewicht der Elektrodenumhüllung 11 bis 21% an Si und 1,5 bis 2,9% an Li aufweist.

10. Elektrode nach einem der Ansprüche 1 bis 9, **dadurch gekennzeichnet, dass** die Umhüllung, ausgedrückt in Ges.-% in der Umhüllung, in den folgenden Anteilen Pulver enthält, die der Herstellung der Umhüllung dienen:
- 0,8 bis 18,5% an Al₂O₃, vorzugsweise 2 bis 16,5% an Al₂O₃,
- 5 bis 40% an SiO₂, vorzugsweise 9 bis 35% an SiO₂,
- 15 bis 45% an TiO₂, vorzugsweise 20 bis 40% an TiO₂,
- 2,8 bis 8,5% an CaO, vorzugsweise 4 bis 7,5% an CaO,
- 0,5 bis 5% an CaF₂, vorzugsweise 1 bis 4% an CaF₂.

11. Elektrode nach einem der Ansprüche 1 bis 10, **dadurch gekennzeichnet, dass** die Umhüllung, ausgedrückt in % des Gesamtgewichts in der Elektrodenumhüllung, in den folgenden Anteilen Elemente enthält, die der Herstellung der Umhüllung dienen:
- 0,4 bis 10,0% an Al, vorzugsweise 1 bis 9% an Al,
- 2,0 bis 19,0% an Si, vorzugsweise 4 bis 17% an Si,
- 9,0 bis 27,0% an Ti, vorzugsweise 12 bis 24% an Ti,
- 0,2 bis 3,0% an Ca, vorzugsweise 0,5 bis 2,5% an Ca, und
- 0,2 bis 3,0% an Li, vorzugsweise 0,4 bis 2,6% an Li.

12. Elektrode nach einem der Ansprüche 1 bis 11, **dadurch gekennzeichnet, dass** die Umhüllung aus einer trockenen Mischung von Umhüllungspulvern erhalten wird, die aus mindestens 17 Gew.-% in der Trockenformel an Partikeln mit einer Korngröße von größer-gleich 100 µm und aus mindestens 8% an Feinpartikeln mit einer Korngröße von kleiner-gleich 40 µm gebildet ist.

13. Elektrode nach einem der Ansprüche 1 bis 12, **dadurch gekennzeichnet, dass** die Stoffmenge, die sich nach einer Fallprüfung von der Umhüllung ablöst, bei welcher die Elektrode einen freien senkrechten Fall aus einer Höhe von 1 Meter auf eine harte waagerechte Fläche erfährt, bei Elektroden, deren Kerndurchmesser 1,6 bis 6 mm beträgt, kleiner-gleich ungefähr 15 Gew.-% unter Bezugnahme auf das Gesamtgewicht der Umhüllung beträgt, und bei Elektroden, deren Kerndurchmesser kleiner als 3,2 mm ist, vorzugsweise kleiner-gleich ungefähr 7%.

14. Elektrode nach einem der Ansprüche 1 bis 10, **dadurch gekennzeichnet, dass** die Umhüllung, ausgedrückt in Gew.-% in der Umhüllung, 4 bis 18% an pulverförmigen Carbonaten, insbesondere an CaCO₃, vorzugsweise 8 bis 13% an Carbonaten, enthält.

15. Lichtbogenschweißverfahren für ein oder mehrere zu schweißende Werkstücke aus nicht rostendem Stahl, wobei eine Elektrode nach einem der Ansprüche 1 bis 14 verwendet wird, um mindestens eine Schweißnaht auf dem oder den zu schweißenden Werkstück (en) herzustellen.

16. Umhüllung für Elektroden, die Rutil enthält und Folgendes umfasst, wobei die Gewichtsprozente (%) für jede Verbindung unter Bezugnahme auf das Gesamtgewicht der Elektrodenumhüllung ausgedrückt sind:
- 5 bis 45 Gew.-% mindestens eines Aluminosilikats auf Basis von Lithium oder insgesamt 0,2 bis 3% an Lithium, das aus der Gesamtheit der Elemente stammt, welche in Form von Pulvern und Bindemitteln der Herstellung der Umhüllung dienen,
- mindestens einen Extrusionshilfsstoff, der frei von Na und/oder K ist,
- Lithiumsilikat als Bindemittel,
- ungefähr 10 bis 55 Gew.-% eines oder mehrerer metallischer Elemente in Form von Ferrolegierungen oder einzelnen Elementen, und
- einen Gesamtanteil von Na und K in der Umhüllung, der 0 bis 0,5 Gew.-% beträgt.
